# EUROPÄISCHE PATENTSCHRIFT

(11) **EP 2 407 754 B1**
(45) Veröffentlichungstag und Bekanntmachung des Hinweises auf die Patenterteilung: **30.03.2016**
(21) Anmeldenummer: 11173933.0
(22) Anmeldetag: 14.07.2011
(51) Int. Cl.: G09B 9/052, G01C 21/26, G01C 21/34, B60W 50/14, B60W 40/09

(54) **Verfahren zum Unterstützen eines Nutzers einer Fahreinheit**
Method for supporting a user of a driving unit
Procédé d'assistance d'un utilisateur d'une unité de conduite

(30) Priorität: 15.07.2010 DE 102010027242
(43) Veröffentlichungstag der Anmeldung: 18.01.2012
(73) Patentinhaber: Continental Automotive GmbH, 30165 Hannover (DE)
(72) Erfinder: Meier, Herbert, 93055 Regensburg (DE); Hain, Ronald, 90522 Oberasbach (DE)

(56) Entgegenhaltungen:
- WO-A2-2005/003885
- DE-A1- 10 149 285
- DE-B3-102006 043 757
- US-A1- 2010 114 469

## Beschreibung

Die Erfindung bezieht sich auf ein Verfahren zum Unterstützen eines Nutzers einer Fahreinheit nach dem Oberbegriff des Anspruchs 1. Ein derartiges Verfahren ist aus der WO 2005/003885 A2 bekannt.

Wie Unfallstatistiken belegen, sind insbesondere Fahranfänger deutlich mehr in Unfälle verwickelt als erfahrene Autofahrer. Dabei zeigt sich, dass Fahranfänger durch das Fahrzeug und durch den Straßenverkehr sehr schnell überfordert werden.

Eine Überforderung durch das Fahrzeug und den Straßenverkehr ist häufig auch bei älteren Fahrern der Fall, die nur noch selten insbesondere in Stadtkernen oder auf Autobahnen unterwegs sind.

Aufgabe der Erfindung ist es, ein Verfahren zum Unterstützen eines Nutzers einer Fahreinheit beim Betrieb der Fahreinheit zu schaffen.

Diese Aufgabe wird erfindungsgemäß durch ein Verfahren mit den Merkmalen des Anspruchs 1 gelöst. Die Fahreinheit weist eine Regeleinheit auf, der von einem Navigationssystem Routendaten bezüglich der aktuellen und/oder bevorstehenden Fahrtposition einer aktivierten Fahrtroute zugeleitet werden, mit einer oder mehreren Fahrzeugdatenerfassungseinheiten, durch die aktuelle Fahrzeugbetriebsdaten erfasst und der Regeleinheit zugeleitet werden, mit einer Fahrregelspeichereinheit, in der Fahrbetriebsdaten von situationsbezogenen Fahrregeln zum Betrieb der Fahreinheit gespeichert sind, wobei die Fahrbetriebsdaten der aktuellen und/oder bevorstehenden Routendaten zuordenbaren Fahrregeln von der Fahrregelspeichereinheit der Regeleinheit zugeleitet und mit den Fahrzeugbetriebsdaten verglichen werden und bei Abweichung oder wesentlicher Abweichung voneinander ein entsprechendes Informationssignal erzeugt und einer Informationseinheit zur Ausgabe einer Information zugeleitet und/oder zur Auswertung eines Fahrverhaltens verwendet wird. Weiterhin ist vorgesehen, dass der Regeleinheit Fahrbetriebsprofile zugeführt werden oder solche Fahrbetriebsprofile von der Regeleinheit erstellt werden und durch die Regeleinheit eine dem eingegebenen Fahrprofil entsprechende Fahrtroute aktiviert wird, wobei deren Routendaten zum Durchführen des Verfahrens verwendet werden.

Damit kann das Verfahren als Fahrlehrer- und Fahrtrainersystem genutzt werden, indem ein Fahren auf solchen Routen erfolgt, auf denen die zu lernenden Fahrregeln geübt werden können. Dabei können Trainingsmodi zusammengestellt werden, bei denen bestimmte Situationen wie z. B. das Einfädeln auf Beschleunigungsstreifen trainiert werden kann.

Durch die aktuellen Fahrzeugbetriebsdaten wird das Fahrverhalten des Nutzers erfasst und mit den Fahrbetriebsdaten verglichen. Die Fahrbetriebsdaten sind für den aktuellen Straßenabschnitt der Fahrroute als Fahrregeln von der Fahrregelspeichereinheit abrufbar.

Entsprechen die Fahrzeugbetriebsdaten zumindest weitgehend den im Fahrregelspeicher für den aktuellen Streckenabschnitt gespeicherten Fahrbetriebsdaten und weichen diese Fahrzeugbetriebsdaten von den Fahrbetriebsdaten nicht gefährdungserhöhend ab, so ist ein Betrieb der Fahreinheit durch den Nutzer sowohl für diesen Nutzer als auch für andere Verkehrsteilnehmer hinsichtlich der überprüften Daten gefahrlos.

Die Routendaten bezüglich der aktuellen oder bevorstehenden Fahrtposition können Informationen über den Verlauf der Route sein, ob ein gerader Verlauf oder ob eine Rechtskurve oder eine Linkskurve bevorsteht, welchen Radius diese Kurve aufweist und über welchen Winkel sich die Kurve erstreckt.

Weitere Informationen können sich auf Gefälle- oder Steigungsstrecken beziehen und deren Steigungs- oder Gefällestärke sowie -länge beinhalten.

Die Art der Straße, ob es sich um eine Autobahn, eine vier- oder zweispurige Bundes-, Landes-, Kreis- oder Ortsstraße handelt, gibt ebenfalls Informationen über Routendaten.

Darüber hinaus können Informationen über den Straßenbelag sowie über durch Aquaplaning gefährdete Streckenbereiche Routendaten sein.

Aus einzelnen oder mehreren kumulierten Informationen ergeben sich Routendaten, denen in der Fahrregelspeichereinheit gespeicherte Fahrbetriebsdaten von dieser Situation entsprechenden Fahrregeln zugeordnet werden, welche dann mit den tatsächlichen Fahrzeugbetriebsdaten verglichen werden.

Die Fahrbetriebsdaten und die Fahrzeugbetriebsdaten können fahreinheitsinterne Daten wie die Fahrgeschwindigkeit und/oder der Lenkeinschlagwinkel und/oder die Aktivierung eines oder mehrerer Fahrzeugelemente wie ein Blinker und/oder Antikollisionsinformationen und/oder Abstandsinformationen sein.

Diese fahreinheitsinternen Daten können durch Sensoren erfasst sein.

Weiterhin können die Fahrbetriebsdaten und die Fahrzeugbetriebsdaten fahreinheitsexterne Daten wie Informationen von von der Fahreinheit passierten Verkehrsschildern und/oder Wetterinformationen und/oder Verkehrsmeldungen und/oder Verkehrsprognosen und/oder Straßenzustandsinformationen sein.

Dazu können die fahreinheitsexternen Daten drahtlos übertragene und von einem Empfänger der Fahreinheit empfangene Daten sein.

Wetterinformationen sind beispielsweise Informationen über Regen sowie die Stärke des Regens, Nebel und dessen Stärke.

Verkehrsmeldungen und Verkehrsprognosen können Informationen über die Höhe des Verkehrsaufkommens und über Staus enthalten.

Durch die Informationseinheit kann eine akustische und/oder eine optische und/oder eine haptische Information ausgegeben werden.

Damit kann der Nutzer auf ein richtiges Verhalten hingewiesen bzw. auf Verhaltungsdefizite wie fehlerhaftes Verhalten aufmerksam gemacht werden.

Dies können präventive Hinweise auf das richtige Verhalten wie z. B. "Verkehr im Rückspiegel überprüfen", "Links blinken und dann die Spur nach links wechseln" sein.

Insbesondere bei gefährlichen Regelverstößen kann durch das Informationssignal eine den Fahrbetrieb der Fahreinheit steuernde Komponente in eine die Fahrzeugbetriebsdaten mit den Fahrbetriebsdaten in Übereinstimmung bringende Weise angesteuert werden.

Ein solcher gefährlicher Regelverstoß wäre z. B. das Fahren als "Geisterfahrer". Dies würde dazu führen, dass durch das Informationssignal aktiv in die Fahrzeugsteuerung eingegriffen würde.

Die Fahreinheit kann ein mobiles Kraftfahrzeug oder ein stationärer Fahrsimulator sein.

Unsichere Fahrer können damit unterstützt werden die Regeln zum richtigen und sicheren Fahren einzuhalten.

Wird das Fahrprofil aufgrund von Abweichungen der Fahrzeugbetriebsdaten von den Fahrbetriebsdaten erzeugt, so können mit der entsprechend dem Fahrprofil aktivierten Fahrtroute genau die Fahrregeln geübt werden, die der Fahrer am wenigsten beherrscht, wie beispielsweise das richtige Auffahren auf eine Autobahn. Insbesondere kann hierfür eine statistische Auswertung der Abweichung der Fahrzeugbetriebsdaten von den Fahrbetriebsdaten erfolgen, um die häufigsten Fahrfehler zu ermitteln.

Begeht ein Nutzer hauptsächlich nur bestimmte Fehlverhalten, so können von der Regeleinheit ein oder mehrere der am meisten vorkommenden Abweichungen der Fahrzeugbetriebsdaten von den zugeordneten Fahrbetriebsdaten ermittelt werden und die Erzeugung eines Informationssignals oder des Fahrprofils auf diese Fahrzeugbetriebsdaten und Fahrbetriebsdaten beschränkt werden.

Damit ist das Verfahren ein lernfähiges Verfahren, da nur noch das fahrerindividuelle Fehlverhalten berücksichtigt und nur noch dann das entsprechende Informationssignal erzeugt wird.

Dazu kann die Regeleinheit fahrerindividualiserbar sein.

Auch können die Regeleinheit und die von dieser zu verarbeitenden Daten z. B. auf länderspezifische Vorschriften wie Linksverkehr oder Rechtsverkehr einstellbar sein.

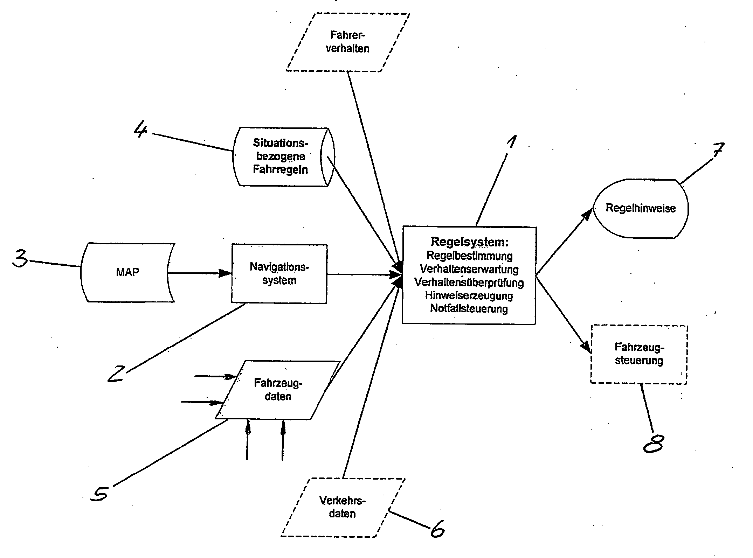

Ein Ausführungsbeispiel der Erfindung ist in der Zeichnung dargestellt und wird im Folgenden näher beschrieben. Die einzige Figur der Zeichnung zeigt eine prinzipielle Darstellung eines Unterstützungssystems für einen Nutzer einer Fahreinheit.

Das dargestellte Unterstützungssystem weist eine Regeleinheit 1 auf, der von einem Navigationssystem 2 fortlaufend Routendaten bezüglich der aktuellen und bevorstehenden Fahrtposition einer aktivierten Fahrtroute zugeleitet werden.

Die Daten der Straßen und Wege sind in einem Kartenspeicher 3 gespeichert und sind von dem Navigationssystem 2 für die aktivierte Fahrtroute abrufbar.

In einer Fahrregelspeichereinheit 4 sind Fahrbetriebsdaten von fahrsituationsbezogenen Fahrregeln zum Betrieb der Fahreinheit gespeichert, beispielsweise zum richtigen Auffahren auf eine Autobahn.

Für die Routendaten der aktuellen und bevorstehenden Fahrpositionen der aktivierten Fahrtroute werden die entsprechenden Fahrbetriebsdaten von der Fahrregelspeichereinheit 4 der Regeleinheit 1 zugeleitet.

Weiterhin erhält die Regeleinheit 1 fortlaufend von einer Fahrzeugbetriebsdateneinheit 5 Fahrzeugbetriebsdaten zugeleitet.

Die Fahrzeugbetriebsdaten der Fahrzeugbetriebsdateneinheit 5 sind fahreinheitsinterne, z. B. durch Sensoren in der Fahreinheit erfassbare Daten.

Von einer Verkehrsdateneinheit 6 werden fortlaufend weitere Fahrbetriebsdaten der Regeleinheit 1 zugeleitet, die fahreinheitsexterne Daten wie z. B. Verkehrsmeldungen sind, welche via TMC (Traffic Message Chanel) der Fahreinheit zugeleitet werden.

Die Fahrzeugbetriebsdaten werden in der Regeleinheit 1 permanent mit den Fahrbetriebsdaten verglichen.

Weicht eines oder mehrere der Fahrzeugbetriebsdaten von den entsprechenden Fahrbetriebsdaten gefährdungserhöhend ab, wird von der Regeleinheit ein Informationssignal erzeugt und einer Informationseinheit 7 zugeleitet.

Diese gibt dann akustisch, optisch oder haptisch eine Meldung aus, die den Nutzer auf das nicht eingehaltene richtige Verhalten im Betrieb der Fahreinheit aufmerksam macht.

Handelt es sich um einen gefährlichen Verhaltensverstoß, kann zusätzlich oder anstatt dessen das Informationssignal einer Fahrzeugsteuereinheit 8 zugeleitet werden, die dann aktiv korrigierend in die Fahreinheitssteuerung eingreift.

Das Informationssignal kann auch zur Auswertung des Fahrverhaltens verwendet werden. Hierzu werden die erzeugten Informationssignale statistisch ausgewertet, um die häufigsten Fahrfehler zu identifizieren. Bezüglich dieser häufigsten Fahrfehler kann dann der Regeleinheit 1 ein Fahrbetriebsprofil zugeführt oder - beispielsweise bei Überschreiten eines Häufigkeitsgrenzwertes - ein solches Fahrbetriebsprofil von der Regeleinheit 1 selbst erstellt werden. Anhand des Fahrprofils kann eine entsprechende Fahrtroute aktiviert werden, auf der die dem identifizierten Fahrfehler entsprechende Fahrsituation häufig vorkommt, sodass diese geübt werden kann. Insbesondere kann bei Abfahren der Fahrtroute dann jeweils vor Erreichen der entsprechenden Fahrsituation ein Hinweis auf das richtige Fahrverhalten ausgegeben werden.

## Patentansprüche

1. Neuer Patentanspruch 1 Verfahren zum Einsatz in einem Fahrlehrer- und Fahrtrainersystem einer Fahreinheit, die aufweist:
- ein Navigationssystem (2) und
- eine Regeleinheit (1), der von dem Navigationssystem (2) Routendaten bezüglich einer Fahrtposition zugeleitet werden,
- eine oder mehrere Fahrzeugdatenerfassungseinheiten, durch die aktuelle Fahrzeugbetriebsdaten erfasst und der Regeleinheit (1) zugeleitet werden,
- eine Fahrregelspeichereinheit (4), in der Fahrbetriebsdaten zum situationsbezogenen Betrieb der Fahreinheit gespeichert sind, wobei
- Fahrbetriebsdaten, die Routendaten der aktuellen und/oder bevorstehenden Fahrtposition zugeordnet werden können, als Fahrregeln von der Fahrregelspeichereinheit (4) der Regeleinheit (1) zugeleitet und mit den Fahrzeugbetriebsdaten verglichen werden und
- bei Abweichung der Fahrzeugbetriebsdaten von den Fahrbetriebsdaten ein entsprechendes Informationssignal erzeugt wird
- und das Informationssignal einer Informationseinheit (7) zur Ausgabe einer Information zugeleitet und/oder zur Auswertung eines Fahrverhaltens verwendet wird, **dadurch gekennzeichnet, dass** der Regeleinheit (1) ein Fahrbetriebsprofil zugeführt wird oder ein solches Fahrbetriebsprofil von der Regeleinheit (1) erstellt wird und durch die Regeleinheit (1) eine dem zugeführten oder erstellten Fahrbetriebsprofil entsprechende Fahrtroute aktiviert wird, wobei der Regeleinheit (1) von dem Navigationssystem (2) Routendaten bezüglich der aktuellen und/oder bevorstehenden Fahrtposition der aktivierten Fahrtroute des Navigationssystems zugeleitet werden.

2. Verfahren nach Anspruch 1, **dadurch gekennzeichnet, dass** die Fahrbetriebsdaten und die Fahrzeugbetriebsdaten fahreinheitsinterne Daten wie die Fahrgeschwindigkeit und/oder der Lenkeinschlagwinkel und/oder die Aktivierung eines oder mehrerer Fahrzeugelemente wie ein Blinker und/oder Antikollisionsinformationen und/oder Abstandsinformationen sind.

3. Verfahren nach Anspruch 2, **dadurch gekennzeichnet, dass** die fahreinheitsinternen Fahrzeugbetriebsdaten durch Sensoren erfasst werden.

4. Verfahren nach einem der vorhergehenden Ansprüche, **dadurch gekennzeichnet, dass** die Fahrbetriebsdaten und die Fahrzeugbetriebsdaten fahreinheitsexterne Daten wie Informationen von von der Fahreinheit passierten Verkehrsschildern und/oder Wetterinformationen und/oder Verkehrsmeldungen und/oder Verkehrsprognosen und/oder Straßenzustandsinformationen sind.

5. Verfahren nach Anspruch 4, **dadurch gekennzeichnet, dass** die fahreinheitsexternen Daten drahtlos übertragene und von einem Empfänger der Fahreinheit empfangene Daten sind.

6. Verfahren nach einem der vorhergehenden Ansprüche, **dadurch gekennzeichnet, dass** durch die Informationseinheit (7) eine akustische und/oder eine optische und/oder eine haptische Information ausgegeben wird.

7. Verfahren nach einem der vorhergehenden Ansprüche, **dadurch gekennzeichnet dass** durch das Informationssignal eine den Fahrbetrieb der Fahreinheit steuernde Komponente in eine die Fahrzeugbetriebsdaten mit den Fahrbetriebsdaten in Übereinstimmung bringende Weise angesteuert wird.

8. Verfahren nach einem der vorhergehenden Ansprüche, **dadurch gekennzeichnet, dass** die Fahreinheit ein mobiles Kraftfahrzeug oder ein stationärer Fahrsimulator ist.

9. Verfahren nach einem der vorhergehenden Ansprüche, **dadurch gekennzeichnet, dass** die Routendaten der aus dem zugeführten oder erstellten Fahrprofil erstellten Fahrtroute zum Durchführen des Verfahrens verwendet werden.

10. Verfahren nach einem der vorhergehenden Ansprüche, **dadurch gekennzeichnet, dass** das Fahrprofil aufgrund von Abweichungen der Fahrzeugbetriebsdaten von den Fahrbetriebsdaten erzeugt wird.

11. Verfahren nach Anspruch 10, **dadurch gekennzeichnet, dass** eine statistische Auswertung der Abweichungen der Fahrzeugbetriebsdaten von den Fahrbetriebsdaten erfolgt.

12. Verfahren nach einem der vorhergehenden Ansprüche, **dadurch gekennzeichnet dass** von der Regeleinheit (1) ein oder mehrere der am meisten vorkommenden Abweichungen der Fahrzeugbetriebsdaten von den zugeordneten Fahrbetriebsdaten ermittelt werden und die Erzeugung eines Informationssignals oder des Fahrprofils auf diese Fahrzeugbetriebsdaten und Fahrbetriebsdaten beschränkt wird.

## Claims

1. Method for use in a driving-instructor and driving-trainer system of a driving unit that has:
- a navigation system (2) and
- a control unit (1), to which route data referring to a journey position are supplied by the navigation system (2),
- one or more vehicle data capture units that capture current vehicle operating data and supply them to the control unit (1),
- a driving rule memory unit (4) that stores driving operating data pertaining to the situation-related operation of the driving unit, wherein
- driving operating data that can assigned to route data for the current and/or imminent journey position are supplied to the control unit (1) as driving rules by the driving rule memory unit (4) and compared with the vehicle operating data, and
- in the event of a discrepancy between the vehicle operating data and the driving operating data, a corresponding information signal is produced
- and the information signal is supplied to an information unit (7) for the output of a piece of information and/or is used to evaluate a driving behaviour,
**characterized in that** the control unit (1) is supplied with a driving operating profile, or such a driving operating profile is created by the control unit (1), and the control unit (1) activates a journey route that corresponds to the supplied or created driving operating profile, wherein the control unit (1) is supplied, by the navigation system (2), with route data referring to the current and/or imminent journey position on the activated journey route of the navigation system.

2. Method according to Claim 1, **characterized in that** the driving operating data and the vehicle operating data are driving-unit-internal data such as the speed of travel and/or steering lock angle and/or activation of one or more vehicle elements such as a direction indicator and/or collision-avoidance information and/or distance information.

3. Method according to Claim 2, **characterized in that** the driving-unit-internal vehicle operating data are captured by sensors.

4. Method according to one of the preceding claims, **characterized in that** the driving operating data and the vehicle operating data are driving-unit-external data such as information from road signs passed by the driving unit and/or weather information and/or traffic reports and/or traffic forecasts and/or road condition information.

5. Method according to Claim 4, **characterized in that** the driving-unit-external data are wirelessly transmitted data received by a receiver of the driving unit.

6. Method according to one of the preceding claims, **characterized in that** the information unit (7) outputs a piece of audible information and/or a piece of visual information and/or a piece of haptic information.

7. Method according to one of the preceding claims, **characterized in that** the information signal actuates a component that controls the driving operation of the driving unit, in a manner that matches the vehicle operating data to the driving operating data.

8. Method according to one of the preceding claims, **characterized in that** the driving unit is a mobile motor vehicle or a stationary driving simulator.

9. Method according to one of the preceding claims, **characterized in that** the route data for the journey route produced from the supplied or created driving profile are used for performing the method.

10. Method according to one of the preceding claims, **characterized in that** the driving profile is produced on the basis of discrepancies between the vehicle operating data and the driving operating data.

11. Method according to Claim 10, **characterized in that** a statistical evaluation is performed for the discrepancies between the vehicle operating data and the driving operating data.

12. Method according to one of the preceding claims, **characterized in that** the control unit (1) ascertains one or more of the most frequently occurring discrepancies between the vehicle operating data and the associated driving operating data, and the production of an information signal or of the driving profile is limited to these vehicle operating data and driving operating data.

## Revendications

1. Procédé à utiliser dans un système d'enseignement de la conduite et d'apprentissage de la conduite d'une unité de conduite qui a :
- un système (2) de navigation et
- une unité (1) de régulation, à laquelle sont envoyées, par le système (2) de navigation, des données d'itinéraire se rapportant à une position de marche,
- une ou plusieurs unités de détection de données de véhicule, par lesquelles des données présentes de fonctionnement du véhicule sont détectées et sont envoyées à l'unité (1) de régulation,
- une unité (4) de mémorisation de règles de conduite, dans laquelle des données de fonctionnement de conduite sont mémorisées pour le fonctionnement rapporté à une situation de l'unité de conduite, dans lequel
- des données de fonctionnement de conduite, qui peuvent être associées aux données d'itinéraire, à la position de marche présente et/ou imminente, sont envoyées à l'unité (1) de régulation comme règles de conduite par l'unité (4) de mémorisation de règles de conduite et sont comparées aux données de fonctionnement du véhicule et
- s'il y a un écart entre les données de fonctionnement de véhicule et les données de fonctionnement de conduite, un signal d'information correspondant est produit
- et le signal d'information est envoyé à une unité (7) d'information pour l'émission d'une information et/ou est utilisé pour l'exploitation d'un comportement de conduite,
**caractérisé en ce qu'**il est envoyé à l'unité (1) de régulation un profil de fonctionnement de conduite ou un profil de fonctionnement de conduite de ce genre établi par l'unité (1) de régulation et il est activé par l'unité (1) de régulation un itinéraire correspondant au profil de fonctionnement de conduite envoyé ou établi, des données d'itinéraire se rapportant à la position de marche présente et/ou imminente de l'itinéraire activé du système de navigation étant envoyées à l'unité (1) de régulation par le système (2) de navigation.

2. Procédé suivant la revendication 1, **caractérisé en ce que** les données de fonctionnement de conduite et les données de fonctionnement de véhicule sont des données internes à l'unité de conduite, comme la vitesse de conduite et/ou l'angle de braquage et/ou l'activation d'un ou de plusieurs éléments du véhicule, comme un clignotant et/ou des informations d'anti-collision et/ou des informations de distance.

3. Procédé suivant la revendication 2, **caractérisé en ce que** les données de fonctionnement de véhicule internes à l'unité de conduite sont détectées par des capteurs.

4. Procédé suivant l'une des revendications précédentes, **caractérisé en ce que** les données de fonctionnement de conduite et les données de fonctionnement de véhicule sont des données externes à l'unité de conduite, comme des informations de panneaux de signalisation devant lesquels l'unité de conduite est passée et/ou des informations météorologiques et/ou des messages de trafic et/ou des messages de circulation et/ou des pronostics de circulation et/ou des informations sur l'état de la chaussée.

5. Procédé suivant la revendication 4, **caractérisé en ce que** les données externes à l'unité de conduite sont des données transmises sans fil et reçues par un récepteur de l'unité de conduite.

6. Procédé suivant l'une des revendications précédentes, **caractérisé en ce qu'**une information acoustique et/ou une information optique et/ou une information haptique est émise par l'unité (7) d'information.

7. Procédé suivant l'une des revendications précédentes, **caractérisé en ce qu'**un élément commandant le fonctionnement de conduite de l'unité de conduite est, par le signal d'information, commandé d'une façon mettant en coïncidence les données de fonctionnement de véhicule et les données de fonctionnement de conduite.

8. Procédé suivant l'une des revendications précédentes, **caractérisé en ce que** l'unité de conduite est un véhicule automobile ou un simulateur de conduite fixe.

9. Procédé suivant l'une des revendications précédentes, **caractérisé en ce que** les données de l'itinéraire établies à partir du profil de conduite envoyé ou établi sont utilisées pour effectuer le procédé.

10. Procédé suivant l'une des revendications précédentes, **caractérisé en ce que** le profil de conduite est produit sur la base d'écarts entre les données de fonctionnement de véhicule et les données de fonctionnement de conduite.

11. Procédé suivant la revendication 10, **caractérisé en ce qu'**une exploitation statistique des écarts entre les données de fonctionnement de véhicule et les données de fonctionnement de conduite est effectuée.

12. Procédé suivant l'une des revendications précédentes, **caractérisé en ce qu'**il est déterminé par l'unité (1) de régulation un ou plusieurs écarts se produisant le plus souvent entre les données de fonctionnement de véhicule et les données de fonctionnement de conduite associées et la production d'un signal d'information ou du profil de conduite est restreinte à ces données de fonctionnement de véhicule et à ces données de fonctionnement de conduite.
